# EUROPÄISCHE PATENTSCHRIFT

(11) **EP 3 237 259 B1**
(45) Veröffentlichungstag und Bekanntmachung des Hinweises auf die Patenterteilung: **12.10.2022**
(21) Anmeldenummer: 15788361.2
(22) Anmeldetag: 26.10.2015
(51) Int. Cl.: B60W 30/12, B60W 50/08, B60W 10/20, B60W 50/00

(54) **VERFAHREN UND VORRICHTUNG ZUR REGELUNG UND STEUERUNG EINER QUERFÜHRUNG EINES FAHRZEUGS MITTELS EINES SPURHALTEASSISTENTEN UND SPURHALTEASSISTENT**
METHOD AND DEVICE FOR REGULATING AND CONTROLLING A LATERAL CONTROL OF A VEHICLE BY MEANS OF A LANE-KEEPING ASSISTANT AND A LANE-KEEPING ASSISTANT
PROCÉDÉ ET DISPOSITIF DE RÉGULATION ET DE COMMANDE D'UN GUIDAGE TRANSVERSAL D'UN VÉHICULE AU MOYEN D'UN ASSISTANT DE TENUE DE ROUTE ET ASSISTANT DE TENUE DE ROUTE

(30) Priorität: 22.12.2014 DE 102014226759
(43) Veröffentlichungstag der Anmeldung: 01.11.2017
(73) Patentinhaber: Robert Bosch GmbH, 70442 Stuttgart (DE)
(72) Erfinder: FU, Chengxuan, 73230 Kirchheim (DE)
(86) Internationale Anmeldenummer: PCT/EP2015/074722
(87) Internationale Veröffentlichungsnummer: WO 2016/102101

(56) Entgegenhaltungen:
- WO-A1-2014/029388
- DE-A1-102007 052 258
- DE-A1-102009 028 647
- DE-A1-102012 002 318
- DE-A1-102012 207 549
- DE-A1-102013 009 424
- DE-A1-102013 010 928
- US-A1- 2008 183 342
- US-A1- 2012 191 266

## Beschreibung

### Stand der Technik

Die vorliegende Erfindung bezieht sich auf ein Verfahren zur Regelung und Steuerung einer Querführung eines Fahrzeugs mittels eines Spurhalteassistenten, auf eine entsprechende Vorrichtung, auf einen Spurhalteassistenten sowie auf ein entsprechendes Computerprogramm.

Spurhalteassistenten dienen der Unterstützung eines Fahrers bei der lateralen Führung seines Fahrzeugs. Beispielsweise kann ein Spurhalteassistent mit einer Mittenführungsfunktion realisiert sein, durch die das Fahrzeug auf einer Spurmitte einer Fahrspur gehalten werden kann. Dabei kann das Fahrzeug überwiegend durch den Spurhalteassistenten gelenkt werden. Ferner sind sogenannte Lane-departure-prevention-Systeme bekannt, die möglichst spät in einen Lenkvorgang eingreifen.

Die DE 10 2013 009 424 A1 zeigt ein Verfahren zur Erkennung einer Hands-Off-Situation. Hat ein Fahrer die Hände nicht am Lenkrad, wird eine Warnung ausgegeben. Zudem wird bei einem Erkannten Verlassen einer aktuellen Fahrspur ein rückführendes Lenkmoment aufgeschaltet.

Die DE 10 2007 052 258 A1 offenbart ein Verfahren, in welchem eine Fahrfunktion zur Querführung eines Fahrzeugs deaktiviert wird, wenn erkannt wird, dass ein Fahrer seine Hand an ein zuvor nicht berührtes Lenkrad bringt. Die US 2012/0191266 A1 offenbart ein Verfahren zur Detektion von freihändigem Fahren. Wird ein freihändiges Fahren erkannt, wird die Funktionalität eines Lenkassistenten zurückgesetzt bzw. deaktiviert.

Aus dem Stand der Technik ist weiterhin die DE 10 2012 207 549 A1 bekannt.

Diese Schrift betrifft ein Verfahren und ein System welches das Erhalten einer Zeit bis zum Abschluss eines Fahrspurzentrierungsmanövers für ein Fahrzeug, das auf einer Fahrbahn fahrt, enthalten können. Auf der Grundlage einer erfassten gegenwärtigen Fahrtrichtung des Fahrzeugs relativ zu einer erfassten Mittellinie, wie durch die Zeit bis zum Abschluss bestimmt ist, kann ein Fahrspurzentrierungsweg für das Manöver berechnet werden. Es kann eine Lenkungseinstellung, die für das Fahrzeug zum Ausfuhren des Manövers in Bezug auf den berechneten Fahrspurzentrierungsweg erforderlich ist, berechnet und auf das Fahrzeug angewendet werden.

Aus dem Stand der Technik ist weiterhin die US 2008/183342 A1 bekannt. Diese Schrift betrifft Verfahren zur Spurwechseldetektion und Handhabung von Spurhaltemoment, wobei das Verfahren umfasst: Ausrücken eines Spurhaltemoments in Ansprechen auf eine Detektion eines Spurwechsels; dadurch gekennzeichnet, dass Daten, die die Distanz eines Fahrzeugs von dem Zentrum der Spur betreffen, gesammelt und mit einer Verzögerung verarbeitet werden, ein Absolutwert der Differenz zwischen den verzögerten Daten und Daten, wie derzeit gesammelt, mit einer Spurwechseldetektionsgrenze verglichen wird, der Spurwechsel detektiert wird, falls der Absolutwert die Spurwechseldetektionsgrenze überschreitet, und ein Spurhaltemoment in Ansprechen darauf wieder eingerückt wird, dass sich das Fahrzeug für eine gegebene Zeitperiode in einer vorbestimmten Distanz des Fahrzeugs zu dem Zentrum der Spur bewegt.

### Offenbarung der Erfindung

Vor diesem Hintergrund werden mit dem hier vorgestellten Ansatz ein Verfahren zur Regelung und Steuerung einer Querführung eines Fahrzeugs mittels eines Spurhalteassistenten, weiterhin eine Vorrichtung, die dieses Verfahren verwendet, ein Spurhalteassistent sowie schließlich ein entsprechendes Computerprogramm gemäß den Ansprüchen 1, 4, 5 und 6 vorgestellt. Ferner ein computerlesbares Speichermedium gemäß dem Anspruch 7. Vorteilhafte Ausgestaltungen ergeben sich aus den jeweiligen Unteransprüchen und der nachfolgenden Beschreibung.

Der hier vorgestellte Ansatz schafft ein Verfahren zur Regelung und Steuerung einer Querführung eines Fahrzeugs mittels eines Spurhalteassistenten, wobei das Verfahren folgende Schritte umfasst:
Einlesen eines Erkennungssignals, das ein freihändiges und/oder nicht freihändiges Fahren des Fahrzeugs repräsentiert und wobei ferner ein vom Fahrer aktiviertes vorgegebenes Steuerungsprofil eingelesen wird, das einen Verlauf eines Lenkmoments zur Lenkunterstützung in Abhängigkeit von einer lateralen Position des Fahrzeugs in einer Fahrspur repräsentiert, wobei das Lenkmoment innerhalb eines vorgegebenen Abstands zu einer Spurmitte der Fahrspur gleich null ist oder zumindest gegen null geht; und
Bereitstellen eines Regelungssignals zur Regelung der Querführung, wenn das Erkennungssignal das freihändige Fahren repräsentiert wobei bei der Regelung mittels eines geschlossenen Wirkungsablaufs Abweichungen von einem Istwert eines Abstands eines Fahrzeugs von einer Spurmitte oder einer Spurbegrenzung einer Fahrspur zu einem Sollwert eines Abstand durch Eingriffe in die Lenkung fortlaufend gegen null geregelt werden, und eines Steuerungssignals zur Steuerung der Querführung, wenn das Erkennungssignal das nicht freihändige Fahren repräsentiert, um je nach erfasstem Abstand zur Spurbegrenzung oder Spurmitte eine Warnung in Form eines haptischen Signals an den Fahrer auszugeben, wobei das Steuerungssignal unter Verwendung des Steuerungsprofils bereitgestellt wird, um die Querführung des Fahrzeugs gemäß dem Steuerungsprofil zu steuern.

Ein Fahrzeug kann ein Kraftfahrzeug wie etwa ein Personen- oder Lastkraftwagen verstanden werden. Unter einem Spurhalteassistenten kann im Allgemeinen ein Fahrerassistenzsystem verstanden werden, das dazu dient, einen Fahrer beim Führen seines Fahrzeugs in einer Fahrspur zu unterstützen. Insbesondere kann der Spurhalteassistent zur Querführung, d. h. zur Beeinflussung einer lateralen Position des Fahrzeugs in der Fahrspur, dienen. Unter einer Regelung, englisch closed loop control genannt, kann ein in sich geschlossener Wirkungsablauf zur Beeinflussung einer Lenkung des Fahrzeugs verstanden werden, etwa anhand eines Abstands des Fahrzeugs zu einer Spurmitte oder einer Spurbegrenzung einer Fahrspur. Dabei kann ein Sollwert des Abstands fortlaufend auf einen Istwert des Abstands rückgekoppelt werden und eine etwaige Abweichung zwischen Soll- und Istwert durch entsprechende Eingriffe in die Lenkung gegen null geregelt werden.

Unter einer Steuerung, englisch open loop control genannt, kann eine offene Wirkungskette verstanden werden, bei der keine Rückkopplung zwischen Soll- und Istwert stattfindet. Die Steuerung kann beispielsweise dazu dienen, um je nach erfasstem Abstand zur Spurbegrenzung oder Spurmitte eine Warnung in Form eines akustischen, optischen oder haptischen Signals an den Fahrer auszugeben.

Das Erkennungssignal kann beispielsweise von einer Handerkennungseinrichtung zur Erkennung einer Hand am Lenkrad des Fahrzeugs bereitgestellt sein. Die Handerkennungseinrichtung kann ausgebildet sein, um eine von der Hand auf das Lenkrad ausgeübte Haltekraft zu erfassen und je nach erfasster Haltekraft das Erkennungssignal bereitzustellen. Beispielsweise kann das Erkennungssignal bei keiner oder sehr geringer Haltekraft das freihändige Fahren, englisch hands-off driving genannt, und bei größerer Haltekraft das nicht freihändige Fahren, englisch hands-on driving genannt, repräsentieren.

Der hier vorgeschlagene Ansatz beruht auf der Erkenntnis, dass ein Spurhalteassistent eines Fahrzeugs in Abhängigkeit von einer Handerkennung an einem Lenkrad zwischen einem Steuerungs- und einem Regelungsmodus umgeschaltet werden kann.

Eine derartige Kombination von Steuerung und Regelung bietet den Vorteil, dass eine Lenkung des Fahrzeugs auch dann ausreichend stabilisiert werden kann, wenn der Fahrer freihändig fährt. Beispielsweise kann in diesem Fall durch Umschalten von der Steuerung auf die Regelung verhindert werden, dass das Fahrzeug zwischen zwei Spurbegrenzungen hin und her pendelt und im schlimmsten Fall von der Fahrspur wegdriftet.

Ferner kann umgekehrt durch Umschalten von der Regelung auf die Steuerung vermieden werden, dass sich der Fahrer durch die Regelung bevormundet fühlt, etwa durch ein einer Lenkbewegung des Fahrers entgegenwirkendes Lenkmoment, das von der Regelung erzeugt wird, wenn der Fahrer eine andere Trajektorie fahren möchte als von der Regelung vorgesehen. Dadurch, dass der Fahrer nicht mehr den Eindruck hat, unnötigerweise gegen das System lenken zu müssen, auch wenn er beliebig schnell zurück in Richtung Spurmitte lenken möchte, kann sich das vom Fahrer empfundene Fahrgefühl verbessern.

Das Verfahren kann mit einem Schritt des Erfassens einer von zumindest einer Hand auf ein Lenkrad des Fahrzeugs ausgeübten Haltekraft vorgesehen sein. In einem Schritt des Ausgebens kann das Erkennungssignal in Abhängigkeit von der Haltekraft, insbesondere unter Berücksichtigung einer vorgegebenen Entprellzeit und, zusätzlich oder alternativ, eines vorgegebenen Schwellenwerts für die Haltekraft, bereitgestellt werden. Unter einer Haltekraft kann beispielsweise ein vom Fahrer mittels des Lenkrads ausgeübtes Handlenkmoment, kurz Handmoment, oder eine Verformungskraft, mit der der Fahrer das Lenkrad beim Umgreifen verformt, verstanden werden. Unter einer Entprellzeit kann eine vorgegebene Zeitspanne von beispielsweise kleiner 5 ms verstanden, während der die Haltekraft mindestens erfasst werden muss, um das Erkennungssignal zu generieren. Unter einem Schwellenwert kann ein Wert oder ein Wertebereich verstanden werden, der als Entscheidungsgrenze beim Ausgeben des Erkennungssignals dient. Beispielsweise kann der Schwellenwert ein Referenzhandlenkmoment zur Unterscheidung zwischen einem nicht gehaltenen und einem gehaltenen Lenkrad repräsentieren. Diese Ausführungsform ermöglicht eine zuverlässige Unterscheidung zwischen freihändigem und nicht freihändigem Fahren. Durch die Entprellzeit kann ferner eine Destabilisierung des Fahrzeugs durch zu schnelles oder zu langsames Umschalten zwischen Steuerung und Regelung verhindert werden.

Es ist zudem von Vorteil, wenn im Schritt des Einlesens ferner ein vom Fahrer aktiviertes vorgegebenes Steuerungsprofil eingelesen wird. Im Schritt des Bereitstellens kann das Steuerungssignal unter Verwendung des Steuerungsprofils bereitgestellt werden, um die Querführung des Fahrzeugs gemäß dem Steuerungsprofil zu steuern. Unter einem Steuerungsprofil kann ein vorbestimmtes Steuerungsverhalten der Steuerung verstanden werden. Beispielsweise kann das Steuerungsprofil in einem Speicher des Spurhalteassistenten hinterlegt sein und durch eine entsprechende Eingabe vom Fahrer ausgewählt und aktiviert werden. Dadurch wird eine einfache Anpassung der Steuerung an die Bedürfnisse und Gewohnheiten des Fahrers ermöglicht. Das Steuerungsprofil kann beispielsweise einen Verlauf eines Lenkmoments zur Lenkunterstützung in Abhängigkeit von einer lateralen Position des Fahrzeugs in einer Fahrspur repräsentieren. Bei dem Lenkmoment kann es sich um ein Moment handeln, das dem vom Fahrer ausgeübten Handlenkmoment entgegengerichtet ist. Beispielsweise kann das Lenkrad mit dem Lenkmoment beaufschlagt werden, um den Fahrer auf eine Abweichung des Fahrzeugs von einer Solltrajektorie, etwa von der Spurmitte, aufmerksam zu machen. Das Lenkmoment kann etwa mit zunehmendem Abstand des Fahrzeugs von der Spurmitte größer werden. Durch diese Ausführungsform lässt sich eine effektive und zuverlässige Steuerung zur Lenkunterstützung realisieren.

Gemäß einer weiteren Ausführungsform kann das Lenkmoment innerhalb eines vorgegebenen Abstands zu einer Spurmitte der Fahrspur, auch Totzone genannt, gleich null sein oder zumindest gegen null gehen. Dadurch kann erreicht werden, dass der Fahrer die volle Kontrolle über das Fahrzeug hat, sofern sich das Fahrzeug in der Spurmitte oder zumindest in der Nähe der Spurmitte befindet. Ein derart konfigurierbares Spurhaltemoment kann zu einer spürbaren Verbesserung des Fahrkomforts beitragen.

Ferner ist es günstig, wenn im Schritt des Einlesens zumindest ein vom Fahrer aktiviertes vorgegebenes weiteres Steuerungsprofil eingelesen wird. Das Steuerungsprofil und das weitere Steuerungsprofil können voneinander abweichen. Im Schritt des Bereitstellens kann das Steuerungssignal unter Verwendung des weiteren Steuerungsprofils bereitgestellt werden, um die Querführung des Fahrzeugs gemäß dem weiteren Steuerungsprofil zu steuern. Dadurch kann die Konfigurierbarkeit der Steuerung verbessert werden.

Im Schritt des Einlesens kann ein Aktivierungssignal eingelesen werden, das eine Aktivierung einer Lenkregelungsfunktion des Spurhalteassistenten durch den Fahrer repräsentiert. Im Schritt des Bereitstellens kann das Regelungssignal unter Verwendung des Aktivierungssignals unabhängig von dem Erkennungssignal bereitgestellt werden. Durch diese Ausführungsform hat der Fahrer die Möglichkeit, die Steuerung des Spurhalteassistenten je nach Bedarf vollständig zu deaktivieren.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen.

Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Des Weiteren schafft der vorgeschlagene Ansatz einen Spurhalteassistenten mit folgenden Merkmalen:
einer Regelungseinheit zur Regelung einer Querführung eines Fahrzeugs;
einer Steuerungseinheit zur Steuerung der Querführung; und
einer mit der Regelungseinheit und/oder der Steuerungseinheit gekoppelten Vorrichtung gemäß einer hier beschriebenen Ausführungsform.

Von Vorteil ist auch ein Computerprogrammprodukt oder Computerprogramm mit Programmcode, der auf einem computerlesbaren Träger oder Speichermedium wie einem Halbleiterspeicher, einem Festplattenspeicher oder einem optischen Speicher gespeichert sein kann und zur Durchführung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 eine schematische Darstellung eines Spurhalteassistenten gemäß einem Ausführungsbeispiel der vorliegenden Erfindung;
Fig. 2 eine schematische Darstellung eines Spurhalteassistenten mit variablem Steuerungsprofil gemäß einem Ausführungsbeispiel der vorliegenden Erfindung;
Fig. 3a, 3b, 3c schematische Darstellungen von Steuerungsprofilen gemäß verschiedenen Ausführungsbeispielen der vorliegenden Erfindung;
Fig. 4 ein Blockschaltbild einer Vorrichtung gemäß einem Ausführungsbeispiel der vorliegenden Erfindung; und
Fig. 5 ein Ablaufdiagramm eines Verfahrens gemäß einem Ausführungsbeispiel der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

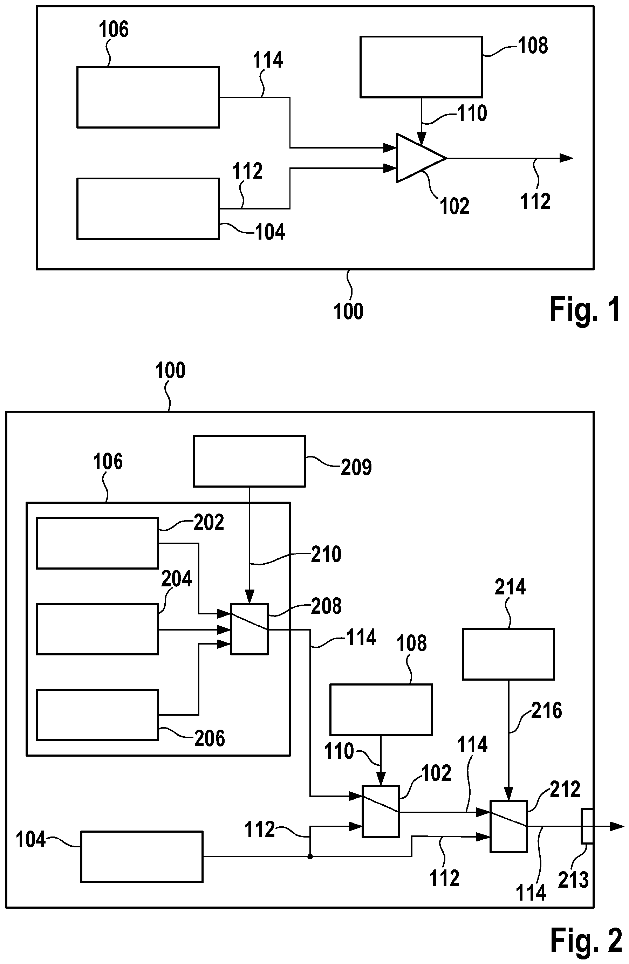

Fig. 1 zeigt eine schematische Darstellung eines Spurhalteassistenten 100 gemäß einem Ausführungsbeispiel der vorliegenden Erfindung. Der Spurhalteassistent 100 dient der Unterstützung eines Fahrers bei der Querführung seines Fahrzeugs. Gemäß diesem Ausführungsbeispiel umfasst der Spurhalteassistent 100 eine Vorrichtung 102, eine Regelungseinheit 104, eine Steuerungseinheit 106 sowie eine Handerkennungseinrichtung 108, die ausgebildet ist, um eine von zumindest einer Hand auf ein Lenkrad des Fahrzeugs ausgeübte Haltekraft, etwa ein Handmoment oder eine Verformung des Lenkrads, zu erfassen und in Abhängigkeit von der erfassten Haltekraft ein Erkennungssignal 110 an die Vorrichtung 102 auszugeben. Beispielsweise repräsentiert das Erkennungssignal 110 ein freihändiges Fahren des Fahrzeugs, wenn die Haltekraft einen vorgegebenen Schwellenwert unterschreitet, und umgekehrt ein nicht freihändiges Fahren des Fahrzeugs, wenn die Haltekraft den Schwellenwert überschreitet.

Die Regelungseinheit 104 ist ausgebildet, um ein Regelungssignal 112 zur Regelung der Querführung zu erzeugen. Analog dazu ist die Steuerungseinheit 106 ausgebildet, um ein Steuerungssignal 114 zur Steuerung der Querführung zu erzeugen. Beispielsweise repräsentieren die beiden Signale 112, 114 je ein dem Handmoment entgegengerichtetes Zusatzlenkmoment, auch Lane-Keeping-Assist-System-Moment oder kurz LKS-Moment genannt.

Die Vorrichtung 102 ist ausgebildet, um unter Verwendung des Erkennungssignals 110 das Regelungssignal 112 bereitzustellen, wenn das Erkennungssignal 110 das freihändige Fahren repräsentiert, d. h., wenn anhand der Haltekraft davon ausgegangen werden kann, dass der Fahrer das Lenkrad losgelassen hat, wie dies in Fig. 1 beispielhaft der Fall ist. Das Regelungssignal 112 kann beispielsweise zur autonomen Mittenführung des Fahrzeugs verwendet werden, durch die das Fahrzeug größtenteils automatisch auf der Spurmitte gehalten werden kann.

Repräsentiert das Erkennungssignal 110 hingegen das nicht freihändige Fahren, d. h., ergibt sich aus der durch die Handerkennungseinrichtung 108 erfasste Haltekraft, dass der Fahrer das Lenkrad umgreift, so stellt die Vorrichtung 102 statt des Regelungssignals 112 das Steuerungssignal 114 bereit, durch das beispielsweise eine Lane-departure-prevention-Funktion des Spurhalteassistenten 100 angesteuert werden kann.

Gemäß einem Ausführungsbeispiel ist die Steuerungseinheit 106 ausgebildet, um ein zur Lenkunterstützung dienendes Lenkmoment aus einer applizierbaren Kennlinie, etwa einer sogenannten Badewannenkurve, zu berechnen. Dabei wird das Lenkmoment umso größer, je mehr sich das Fahrzeug einer Spurbegrenzung nähert. In der Spurmitte ist das Lenkmoment hingegen null oder zumindest sehr klein. Ein solches Steuerungsverfahren bietet den Vorteil einer geringen Komplexität und einer entsprechend einfachen Umsetzbarkeit.

Die Handerkennungseinrichtung 108 erkennt, ob der Fahrer mitlenkt oder nicht, etwa anhand eines gemessenen Lenkradmoments. Falls der Fahrer freihändig fährt, schaltet die Vorrichtung 102 durch Bereitstellung des Regelungssignals 112 auf Regelung um, um das Fahrzeug möglichst gut in der Spur zu halten. Erkennt die Handerkennungseinrichtung 108 hingegen, dass der Fahrer mitlenkt, so schaltet die Vorrichtung 102 durch Bereitstellung des Steuerungssignals 114 auf Steuerung um, um ein gutes und konsistentes Fahrgefühl zu gewährleisten.

Gemäß einem Ausführungsbeispiel werden bei der vorangehend beschriebenen Hands-off-/Hands-on-Erkennung eine Entprellzeit und die Schwellen des Handmoments so gewählt, dass die Umschaltung von Steuerung auf Regelung einerseits nicht zu schnell erfolgt, etwa wenn der Fahrer nur kurz die Hände vom Lenkrad wegnimmt, andererseits aber auch nicht zu langsam erfolgt, damit die Regelung rechtzeitig eingreift, bevor die Stabilität des Fahrzeug gefährdet ist. Die Entprellzeit ist beispielsweise auf weniger als 5 s eingestellt und damit deutlich kürzer als die Zeit, die zur Generierung einer an den Fahrer gerichteten Hands-off-Warnung erforderlich ist.

Fig. 2 zeigt eine schematische Darstellung eines Spurhalteassistenten 100 mit variablem Steuerungsprofil gemäß einem Ausführungsbeispiel der vorliegenden Erfindung. Im Unterschied zu dem anhand von Fig. 1 beschriebenen Spurhalteassistenten sind in der Steuerungseinheit 106 gemäß Fig. 2 beispielhaft ein erstes Steuerprofil 202, ein zweites Steuerprofil 204 und ein drittes Steuerprofil 206 hinterlegt. Eine Profilaktivierungseinheit 208 der Steuerungseinheit 106 ist ausgebildet, um von einer Einstelleinheit 209 eine Information 210 über eine vom Fahrer getroffene Profilauswahl zu empfangen und unter Verwendung der Information 210 ein der Profilauswahl entsprechendes Steuerungsprofil zu aktivieren, hier beispielhaft das erste Steuerprofil 202. Die Profilaktivierungseinheit 208 übermittelt das erste Steuerprofil 202 in Form des Steuerungssignals 114 an die Vorrichtung 102.

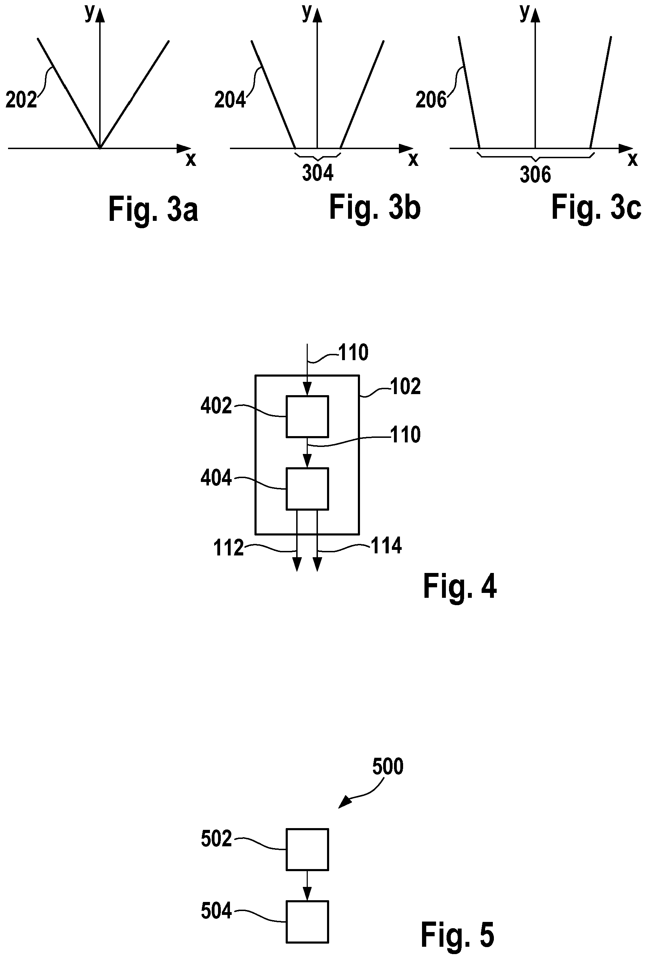

Gemäß diesem Ausführungsbeispiel handelt es sich bei dem ersten Steuerungsprofil 202 um ein Profil ohne Totzone, bei dem zweiten Steuerungsprofil 204 um ein Profil mit kleiner Totzone und bei dem dritten Steuerungsprofil 206 um ein Profil mit großer Totzone. Die Unterschiede zwischen den drei Steuerungsprofilen 202, 204, 206 werden nachfolgend anhand der Figuren 3a bis 3c näher erläutert.

Im Gegensatz zu Fig. 1 repräsentiert das Erkennungssignal 110 beispielhaft ein nicht freihändiges Fahren des Fahrzeugs. Dementsprechend stellt die Vorrichtung 102 das das erste Steuerungsprofil 202 repräsentierende Steuerungssignal 114 bereit.

Die Vorrichtung 102 und die Regelungseinheit 104 sind über einen Schalter 212 mit einem Signalausgang 213 des Spurhalteassistenten 100 verbunden. Der Signalausgang 213 ist beispielsweise mit einer Lenkung des Fahrzeugs gekoppelt. Der Schalter 212 ist mit einer vom Fahrer betätigbaren Aktivierungseinheit 214 gekoppelt, die ausgebildet ist, um bei Betätigung ein Aktivierungssignal 216 an den Schalter 212 zu senden. Der Schalter 212 ist ausgebildet, um ansprechend auf das Empfangen des Aktivierungssignals 216 den Signalausgang 213 direkt mit der Regelungseinheit 104 zu koppeln. Dadurch wird unabhängig von einem an der Vorrichtung 102 anliegenden Erkennungssignal 110 eine Regelung der Lenkung des Fahrzeugs mittels des Regelungssignals 112 ermöglicht.

Beispielhaft ist in Fig. 2 der Signalausgang 213 über den Schalter 212 mit der Vorrichtung 102 gekoppelt. Dementsprechend wird in Fig. 2 das Steuerungssignal 114 über den Signalausgang 213 bereitgestellt.

Durch den Spurhalteassistenten 100 gemäß Fig. 2 kann der Fahrer ein Profil der Lenkunterstützung je nach Bedarf selbst einstellen. Möchte er nicht oder kaum selbst lenken, so kann er die Regelung wählen. Möchte er nur ein wenig lenken, so kann er das erste Steuerungsprofil 202 ohne Totzone wählen. Möchte er ein wenig mehr mitlenken, so kann er das Steuerungsprofil 204 mit kleiner Totzone aktivieren. Möchte er überwiegend selbst lenken, so kann er das Steuerungsprofil 206 mit großer Totzone wählen.

Gemäß einem Ausführungsbeispiel kann zur Steuerung anhand einer prädizierten Position des Fahrzeugs in Bezug auf eine Spurmitte festgestellt werden, ob sich das Fahrzeug nach einer bestimmten Prädiktionszeit in der Totzone oder außerhalb der Totzone befindet. Innerhalb der Totzone findet keine Lenkunterstützung statt; außerhalb der Totzone ist die Lenkunterstützung aktiv, d. h., es wird beispielsweise das Zusatzlenkmoment erzeugt.

Die prädizierte Position wird genutzt, um eine Latenzzeit im gesamten Fahrzeugsystem zu kompensieren.

Die Figuren 3a, 3b, 3c zeigen schematische Darstellungen von Steuerungsprofilen 202, 204, 206 gemäß verschiedenen Ausführungsbeispielen der vorliegenden Erfindung. In den Figuren 3a bis 3c ist ein jeweiliger Verlauf der anhand von Fig. 2 beschriebenen Steuerungsprofile 202, 204, 206 als Momentenprofil dargestellt. Dabei repräsentiert eine y-Achse ein LKS-Lenkradmoment und eine x-Achse einen prädizierten lateralen Abstand des Fahrzeugs zur Spurmitte, die hier dem Ursprung entspricht.

Fig. 3a zeigt das erste Steuerungsprofil 202 ohne Totzone. Das Steuerungsprofil 202 weist einen im Wesentlichen v-förmigen Verlauf aus zwei spiegelsymmetrisch zueinander angeordneten Geraden an, die sich im Ursprung schneiden, d. h., das Lenkmoment fällt links der y-Achse mit abnehmendem Abstand zur Spurmitte linear auf null ab und steigt rechts der y-Achse mit zunehmendem Abstand zur Spurmitte linear an.

Im Unterschied zu Fig. 3a schneiden sich die beiden Geraden der in den Figuren 3b und 3c gezeigten Steuerungsprofile nicht im Ursprung, sondern auf einem hier nicht gezeigten negativen Abschnitt der y-Achse. Beispielhaft weist das Steuerungsprofil 204 eine kleine Totzone 304 und das Steuerungsprofil 206 eine große Totzone 306 auf. Die beiden Totzonen 304, 306 sind durch einen Abstand zwischen den Schnittpunkten der beiden Geraden mit der x-Achse definiert. Gemäß diesem Ausführungsbeispiel ist das Lenkmoment innerhalb der Totzonen 304, 306 gleich null.

Fig. 4 zeigt ein Blockschaltbild einer Vorrichtung 102 gemäß einem Ausführungsbeispiel der vorliegenden Erfindung. Bei der Vorrichtung 102 handelt es sich beispielsweise um eine anhand der Figuren 1 bis 3c beschriebene Vorrichtung zur Regelung oder Steuerung einer Querführung eines Fahrzeugs mittels eines Spurhalteassistenten. Die Vorrichtung 102 umfasst eine Einleseeinheit 402 und eine Bereitstellungseinheit 404. Die Einleseeinheit 402 ist ausgebildet, um das Erkennungssignal 110 einzulesen und an die Bereitstellungseinheit 404 zu übertragen. Die Bereitstellungseinheit 404 ist ausgebildet, um unter Verwendung des Erkennungssignals 110 das Regelungssignal 112 bereitzustellen, wenn das Erkennungssignal 110 ein freihändiges Fahren des Fahrzeugs repräsentiert. Je nach Ausführungsform ist die Bereitstellungseinheit 404 ausgebildet, um unter Verwendung des Erkennungssignals 110 zusätzlich oder alternativ das Steuerungssignal 114 bereitzustellen, wenn das Erkennungssignal 110 ein nicht freihändiges Fahren repräsentiert.

Fig. 5 zeigt ein Ablaufdiagramm eines Verfahrens 500 gemäß einem Ausführungsbeispiel der vorliegenden Erfindung. Das Verfahren 500 zur Regelung oder Steuerung einer Querführung eines Fahrzeugs mittels eines Spurhalteassistenten kann beispielsweise von einer Vorrichtung, wie sie vorangehend anhand der Figuren 1 bis 4 beschrieben ist, durchgeführt, angesteuert oder umgesetzt werden.

In einem Schritt 502 wird ein Erkennungssignal eingelesen, das ein freihändiges oder nicht freihändiges Fahren des Fahrzeugs repräsentiert. Repräsentiert das Erkennungssignal das freihändige Fahren, so wird in einem Schritt 504 ein Regelungssignal zur Regelung der Querführung bereitgestellt. Repräsentiert das Erkennungssignal hingegen das nicht freihändige Fahren, so wird im Schritt 504 ein Steuerungssignal zur Steuerung der Querführung bereitgestellt.

Die beschriebenen und in den Figuren gezeigten Ausführungsbeispiele sind nur beispielhaft gewählt.

Die vorliegende Erfindung wird durch die nachfolgenden Ansprüche definiert.

## Patentansprüche

1. Verfahren (500) zur Regelung und Steuerung einer Querführung eines Fahrzeugs mittels eines Spurhalteassistenten (100), wobei das Verfahren (500) folgende Schritte umfasst:
Einlesen (502) eines Erkennungssignals (110), das ein freihändiges oder nicht freihändiges Fahren des Fahrzeugs repräsentiert und wobei ferner ein vom Fahrer aktiviertes vorgegebenes Steuerungsprofil (202) eingelesen wird, das einen Verlauf eines Lenkmoments zur Lenkunterstützung in Abhängigkeit von einer lateralen Position des Fahrzeugs in einer Fahrspur repräsentiert, wobei das Lenkmoment innerhalb eines vorgegebenen Abstands (304; 306) zu einer Spurmitte der Fahrspur gleich null ist oder zumindest gegen null geht; und
Bereitstellen (504) eines Regelungssignals (112) zur Regelung der Querführung, wenn das Erkennungssignal (110) das freihändige Fahren repräsentiert, wobei bei der Regelung mittels eines geschlossenen Wirkungsablaufs Abweichungen von einem Istwert eines Abstands eines Fahrzeugs von einer Spurmitte oder einer Spurbegrenzung einer Fahrspur zu einem Sollwert eines Abstand durch Eingriffe in die Lenkung fortlaufend gegen null geregelt werden und eines Steuerungssignals (114) zur Steuerung der Querführung, wenn das Erkennungssignal (110) das nicht freihändige Fahren repräsentiert, um je nach erfasstem Abstand zur Spurbegrenzung oder Spurmitte eine Warnung in Form eines haptischen Signals an den Fahrer auszugeben, wobei das Steuerungssignal (114) unter Verwendung des Steuerungsprofils (202) bereitgestellt wird, um die Querführung des Fahrzeugs gemäß dem Steuerungsprofil (202) zu steuern.

2. Verfahren (500) gemäß Anspruch 1, **gekennzeichnet durch** einen Schritt des Erfassens einer von zumindest einer Hand auf ein Lenkrad des Fahrzeugs ausgeübten Haltekraft, wobei in einem Schritt des Ausgebens das Erkennungssignal (110) in Abhängigkeit von der Haltekraft, insbesondere unter Berücksichtigung einer vorgegebenen Entprellzeit und/oder eines vorgegebenen Schwellenwerts für die Haltekraft, bereitgestellt wird.

3. Verfahren (500) gemäß einem der vorausgegangenen Ansprüche,
**dadurch gekennzeichnet, dass** im Schritt des Einlesens (502) zumindest ein vom Fahrer aktiviertes vorgegebenes weiteres Steuerungsprofil (204, 206) eingelesen wird, wobei das Steuerungsprofil (202) und das weitere Steuerungsprofil (204, 206) voneinander abweichen, wobei im Schritt des Bereitstellens (504) das Steuerungssignal (114) unter Verwendung des weiteren Steuerungsprofils (204, 206) bereitgestellt wird, um die Querführung des Fahrzeugs gemäß dem weiteren Steuerungsprofil (204, 206) zu steuern.

4. Vorrichtung (102), die ausgebildet ist, um alle Schritte eines Verfahrens (500) gemäß einem der vorangegangenen Ansprüche durchzuführen.

5. Spurhalteassistent (100) mit folgenden Merkmalen:
einer Regelungseinheit (104) zur Regelung einer Querführung eines Fahrzeugs; und
einer Steuerungseinheit (106) zur Steuerung der Querführung; und
einer mit der Regelungseinheit (104) und der Steuerungseinheit (106) gekoppelten Vorrichtung (102) gemäß Anspruch 4.

6. Computerprogramm, das dazu eingerichtet ist, alle Schritte eines Verfahrens (500) gemäß einem der Ansprüche 1 bis 3 durchzuführen.

7. Computerlesbares Speichermedium mit einem darauf gespeicherten Computerprogramm nach Anspruch 6.

## Claims

1. Method (500) for the closed-loop and open-loop control of lateral guidance of a vehicle by means of a lane-keeping assistant (100), wherein the method (500) comprises the following steps of:
reading in (502) a detection signal (110) representing hands-free or non-hands-free driving of the vehicle, wherein a predefined open-loop control profile (202) which is activated by the driver and represents a progression of a steering torque for steering assistance on the basis of a lateral position of the vehicle in a lane is also read in, wherein the steering torque is equal to zero or at least tends towards zero within a predefined distance (304; 306) from a centre of the lane; and
providing (504) a closed-loop control signal (112) for the closed-loop control of the lateral guidance if the detection signal (110) represents hands-free driving, wherein, during closed-loop control by means of a closed sequence of action, deviations of an actual value of a distance between a vehicle and a centre or a boundary of a lane with respect to a target value of a distance are continuously controlled towards zero in a closed-loop manner by means of interventions in the steering, and providing an open-loop control signal (114) for the open-loop control of the lateral guidance if the detection signal (110) represents non-hands-free driving, in order to output a warning to the driver in the form of a haptic signal depending on the detected distance to the boundary or centre of the lane, wherein the open-loop control signal (114) is provided using the open-loop control profile (202) in order to control the lateral guidance of the vehicle in an open-loop manner according to the open-loop control profile (202).

2. Method (500) according to Claim 1, **characterized by** a step of detecting a holding force exerted on a steering wheel of the vehicle by at least one hand, wherein, in an outputting step, the detection signal (110) is provided on the basis of the holding force, in particular taking into account a predefined debouncing time and/or a predefined threshold value for the holding force.

3. Method (500) according to one of the preceding claims, **characterized in that,** in the reading-in step (502), at least one predefined further open-loop control profile (204, 206) which is activated by the driver is read in, wherein the open-loop control profile (202) and the further open-loop control profile (204, 206) differ from one another, wherein, in the providing step (504), the open-loop control signal (114) is provided using the further open-loop control profile (204, 206) in order to control the lateral guidance of the vehicle in an open-loop manner according to the further open-loop control profile (204, 206).

4. Apparatus (102) which is designed to carry out all steps of a method (500) according to one of the preceding claims.

5. Lane-keeping assistant (100) having the following features:
a closed-loop control unit (104) for the closed-loop control of lateral guidance of a vehicle; and
an open-loop control unit (106) for the open-loop control of the lateral guidance; and
an apparatus (102) according to Claim 4 which is coupled to the closed-loop control unit (104) and to the open-loop control unit (106).

6. Computer program which is configured to carry out all steps of a method (500) according to one of Claims 1 to 3.

7. Computer-readable storage medium with a computer program according to Claim 6 stored thereon.

## Revendications

1. Procédé (500) de régulation et de commande d'un guidage transversal d'un véhicule au moyen d'un assistant de tenue de route (100), le procédé (500) comprenant les étapes suivantes consistant à :
lire (502) un signal de reconnaissance (110) qui représente une conduite du véhicule à mains libres ou sans mains libres, et dans lequel en outre un profil de commande (202) prédéfini, activé par le conducteur, est lu qui représente un tracé d'un couple de braquage servant à la direction assistée en fonction d'une position latérale du véhicule sur une voie de circulation, le couple de braquage étant égal à zéro ou tendant au moins vers zéro à une distance prédéfinie (304 ; 306) par rapport à un centre de voie de la voie de circulation ; et
fournir (504) un signal de régulation (112) permettant de réguler le guidage transversal si le signal de reconnaissance (110) représente la conduite à mains libres, dans lequel, lors de la régulation au moyen d'une boucle fermée, des écarts par rapport à une valeur réelle d'une distance entre un véhicule et un centre de voie ou une limite de voie d'une voie de circulation sont régulés vers une valeur théorique d'une distance sont régulés en continu vers zéro par des interventions sur la direction, et au moyen d'un signal de commande (114) permettant de commander le guidage transversal si le signal de reconnaissance (110) représente la conduite sans mains libres afin de sortir un avertissement sous la forme d'un signal haptique à destination du conducteur respectivement en fonction de la distance détectée par rapport à la limite de voie ou au centre de voie, le signal de commande (114) étant fourni en utilisant le profil de commande (202) afin de commander le guidage transversal du véhicule selon le profil de commande (202).

2. Procédé (500) selon la revendication 1, **caractérisé par** une étape consistant à détecter une force de maintien exercée par au moins une main sur un volant du véhicule, dans lequel, dans une étape de sortie, le signal de reconnaissance (110) est fourni en fonction de la force de maintien, en particulier en tenant compte d'un délai anti-rebond prédéfini et/ou d'une valeur seuil prédéfinie pour la force de maintien.

3. Procédé (500) selon l'une quelconque des revendications précédentes, **caractérisé en ce qu'**à l'étape de lecture (502), au moins un autre profil de commande (204, 206) prédéfini, activé par le conducteur, est lu, le profil de commande (202) et l'autre profil de commande (204, 206) divergeant l'un de l'autre, dans lequel, à l'étape de fourniture (504), le signal de commande (114) est fourni en utilisant l'autre profile de commande (204, 206) pour commander le guidage transversal du véhicule selon l'autre profil de commande (204, 206).

4. Dispositif (102) qui est réalisé pour exécuter toutes les étapes d'un procédé (500) selon l'une quelconque des revendications précédentes.

5. Assistant de tenue de route (100) présentant les particularités suivantes :
une unité de régulation (104) permettant de réguler un guidage transversal d'un véhicule ; et
une unité de commande (106) permettant de commander le guidage transversal ; et
un dispositif (102) selon la revendication 4, couplé avec l'unité de régulation (104) et l'unité de commande (106).

6. Programme informatique qui est conçu pour exécuter toutes les étapes d'un procédé (500) selon l'une quelconque des revendications 1 à 3.

7. Support de stockage lisible par ordinateur avec un programme informatique selon la revendication 6 stocké sur celui-ci.
